# EUROPEAN PATENT APPLICATION

(11) **EP 2 072 311 A1**
(43) Date of publication of application: **24.06.2009**
(21) Application number: 07076100.2
(22) Date of filing: 18.12.2007
(51) Int. Cl.: B60K 6/26, B60K 6/365, B60K 6/445, B60K 6/448

(54) **Drive system for hybrid vehicle**

(71) Applicant: Nederlandse Organisatie voor Toegepast- Natuurwetenschappelijk Onderzoek TNO, 2628 VK Delft (NL)
(72) Inventor: Foster, Darren Leigh, 2803 DK Gouda (NL)
(74) Representative: Hatzmann, Martin

(57) **Abstract**

Drive system, in particular for a hybrid vehicle, comprising a power split device (2) with associated drive paths (I,IIa,IIb), wherein at least one of the drive paths comprises two mechanically coupled electric machines that form a cascaded power split having both a mechanical (IIa) and an electrical drive path (IIb).
The invention also relates to a hybrid vehicle, a method for transmission of power in a drive system and to the use of a dual air gap electric machine in a drive path of a drive system with a power split device.

## Description

The invention relates to a drive system, in particular to a drive system for a hybrid vehicle, provided with an engine and an electric machine. The engine and the electric machine are power sources that each have different characteristics and of which the driving power is used to run the vehicle in a combination that is optimal for the conditions.

In recent years hybrid vehicles have been developed and put into practical use. In such a hybrid vehicle, strengths of each power source are used to compensate for weaknesses of the other power source by using the driving power from the two types of power sources in a combination that is optimal for the driving conditions. As a result, the power performance of the vehicle is sufficiently ensured and the fuel consumption rate and emission performance are largely improved.

Various proposals have been made for the drive systems to be used in hybrid vehicles. One proposal includes the use of a combustion engine of which the output shaft is coupled to a power split device, e.g. a planetary gear that splits the torque of the engine into two drive paths. A first path includes a mechanical path that transmits mechanical power only. A second path includes two electric machines. Between these electrical machines, this path transmits electrical power only. The two drive paths are mechanically coupled downstream of the electrical machines, e.g. using a mechanical reduction device. The coupled paths go to the final drive.A first one of the electric machines functions as a generator, and a second one of the electric machines functions as a motor or vice versa. The motor and the generator are coupled via inverters. The inverter are coupled to the battery.

Presently, an impediment to extensive market penetration is the relatively high costs of such hybrid drive systems, forming an investment barrier and reduced margins for the manufacturer. Two major costs components in such a hybrid system are the electric machines, especially the inverter component and the battery component. In particular, if the electrical power transmitted trough the second path is high, relatively large inverters are necessary, and high stresses are placed on the cooling system for the electric parts. In practice, to keep costs down, the transmission ratio range is limited, restricting vehicle performance at low vehicles speed. In particular, low speed drive torque is negatively affected, which limits trailer tow ability.

The invention aims to lessen the above disadvantages. Thereto, the invention provides for a drive system, in particular for a hybrid vehicle, comprising a power split device with associated drive paths, wherein at least one of the drive paths comprises two mechanically coupled electric machines that form a cascaded power split having both a mechanical and an electrical drive path.

By using mechanically coupled, preferably mechanically integrated, electric machines forming a cascaded power split, significant cost reduction on the electric machine side can be achieved. In particular, because the coupled electric machines form a cascaded power split, a mechanical drive path is available to transmit power within the drive path with the electrical machines. This way, installed electric power and inverter rating can be significantly reduced. Further, due to integration of the electric machines, system mass, volume and complexity can be reduced.

By using a dual air gap machine as mechanically coupled electric machines, a compact yet relatively simple mechanically integrated design can be used. Preferably, the dual air gap machine comprises a rotor, an interrotor and a stator that together form two mechanically integrated electric machines. Examples of such machines are disclosed in US5917248, WO 0034066, EP1154551A2, WO03051660 and in Longya Xu, "A new breed of electric machines- basic analysis and applications of dual mechanical port electric machines," Proc. 8th Int. Conf. Electrical Machines and Systems, Nanjing, 2005, pp. 24-29. The mechanically coupled electric machines may be used as an electric variator, i.e. as a unit that enforces a given speed difference across the input and output shaft of the drive path with the electrical machines.

Advantageously, the two electric machines are also magnetically coupled, and are preferably part of an electric variable transmission such as for example disclosed by applicant in WO 03/075437. Such a machine can e.g. be characterized as an electric variable transmission comprising an electromechanical converter provided with a primary shaft having a rotor mounted thereon, a secondary shaft having an interrotor mounted thereon, and a stator, fixedly mounted to the housing of the electromechanical converter wherein, viewed from the primary shaft in radial direction, the rotor, the interrotor and the stator are arranged concentrically relative to each other, and wherein the rotor and the stator are designed with one or more mono- or polyphase, electrically accessible windings, wherein the interrotor forms one whole both mechanically and electromagnetically, and is arranged as an conductor for the magnetic flux in tangential and radial direction, and wherein the pattern of magnetic poles in the magnetic flux conducting material on at least one side of the interrotor is free and can be varied during operation.

The power split device in the drive system can be an input split type, an output split type, a compound split type or combinations of the above.Preferably, the power split device is an output split device that is arranged to combine two power paths at the transmission output. Another option is the input split type, wherein the power split occurs at the input side of the transmission. Yet another option is the compound split configuration, where the power is split at the transmission input and again combined by a second power split device at the transmission output. The power split device may comprise a planetary gear, but may also comprise a hydraulic torque converter of suitable configuration.

The invention also relates to a hybrid vehicle, comprising a drive system in any of the variants described above, as well as to the use of a dual air gap electric machine, in particular an electric variable transmission, in a drive path of a drive system with a power split device. The invention further relates to a method for transmission of power in a drive system, wherein the drive power is split into drive paths, and wherein the power in one of the drive paths is split again using two mechanically coupled, in particular mechanically integrated, and preferably also electromagnetically coupled electric machines. This way, the split path can be subdivided into both an electric and a mechanical drive path, thereby reducing the power requirements for the components in the electric drive path.

Other features and aspects of the invention will be apparent from the following example, which is given as a non-limiting preferred embodiment only. In the drawings,
Fig. 1 shows a block diagram of a drive system incorporating an electric variable transmission;
Fig. 2 shows a block diagram of the transmission of Fig. 1 represented as a cascaded power split;
Fig. 3 shows a block diagram of another embodiment of a drive system incorporating an electric variable transmission;
Fig. 4 shows a block diagram of the transmission of Fig. 5 represented as a cascaded power split;
Fig. 5 shows a schematic representation of an electric variable transmission;
Fig. 6 shows a graph comparing power split characteristics;
Fig. 7 shows a graph denoting power split ratio versus transmission ratio for a drive system including an electric variable transmission;
Fig. 8 shows a table comparing machine torques for different drive systems.

The drawings are only schematic representations of preferred, exemplary embodiments of the invention. Further, it is noted that similar or corresponding parts are denoted using the same reference numerals.

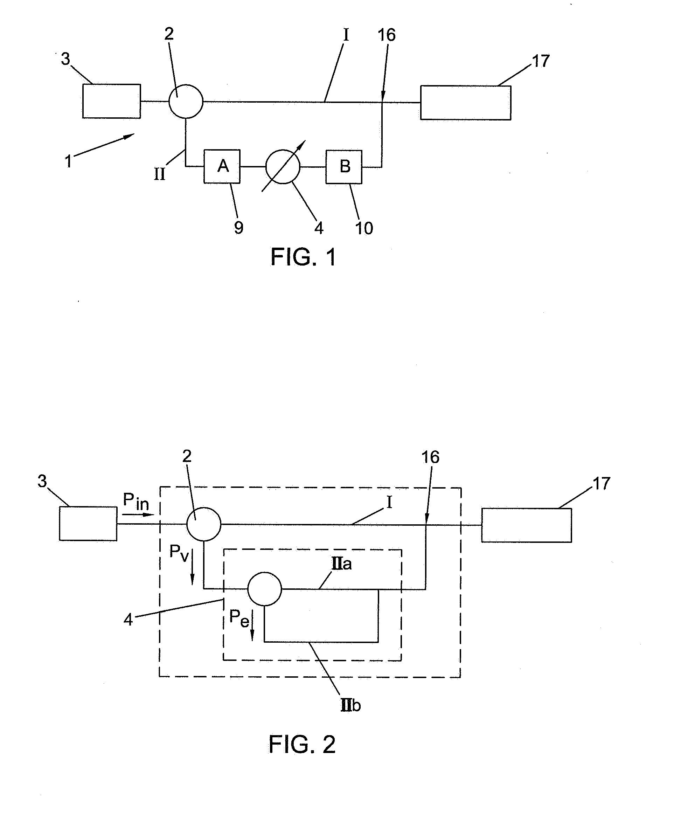

Fig. 1 shows a drive system 1 for a hybrid vehicle. The hybrid vehicle may e.g. be an automobile that combines two motive power sources, such as an internal combustion engine and an electric motor. The drive system 1 comprises a power split device 2. In this embodiment, the power split device is embodied as a planetary gear system.

The power split device 2 is here embodied as an input split device that is arranged to split inut power. In such an input split configuration, the transmission paths are split at the transmission entrance and are coupled at the transmission output.

The input power for the power split device 2 here is generated by a combustion engine 3. Such a combustion engine may e.g. be an internal combustion engine, such as a Diesel motor or an Otto motor. The power split device 2 splits the torque generated by the engine into two drive paths that meet each other at a junction point 16 before a differential 17. [. A first path I that is shown in the top of the drawing transmits mechanical power only. A second path II, which is shown below the first path in the drawings, comprises two integrated, mechanically and preferably also magnetically coupled electric machines 4. The electric machines 4 form a cascaded power split having both a mechanical and an electrical drive path. This is illustrated in fig. 2. The second path II includes a mechanical sub path IIa and an electrical sub path IIb in parallel.

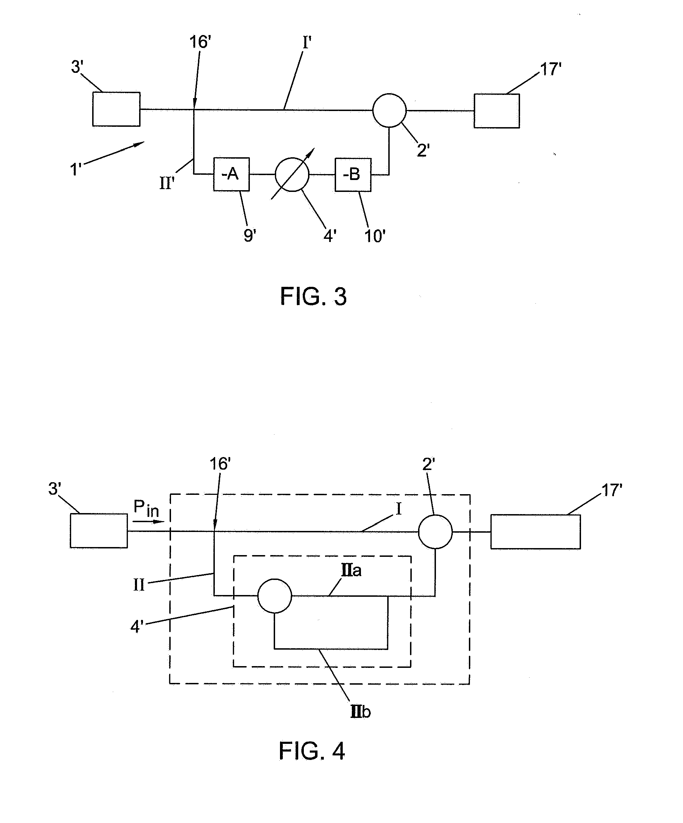

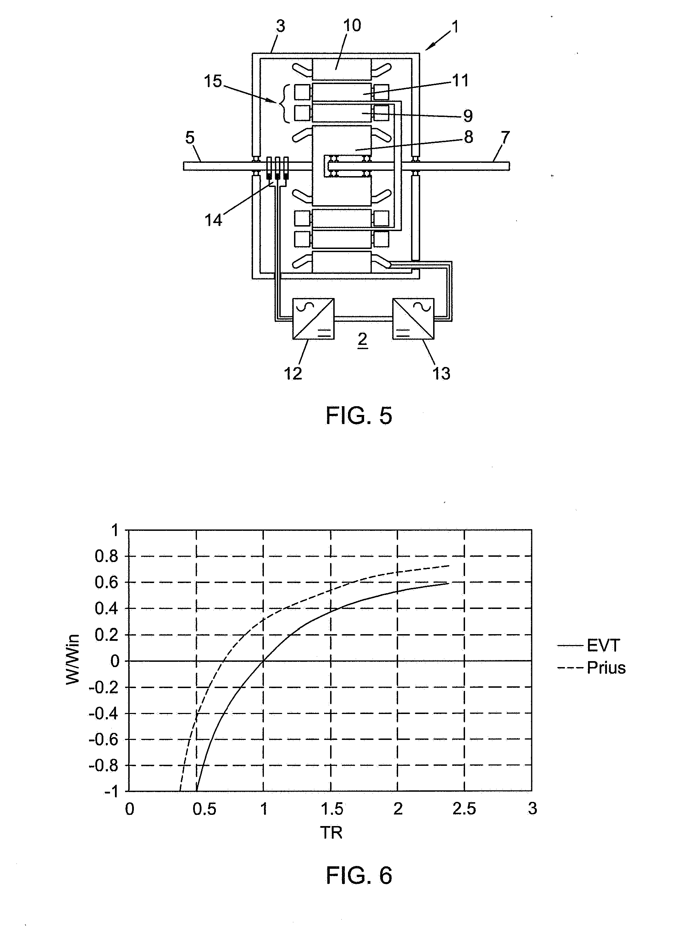

In this example, two mechanically and magnetically coupled electrical machines are provided that are part of an electric variable transmission (E.V.T.). Such an electric variable transmission is described in detail in WO 03/075437 in the name of applicant. In particular, with reference to fig. 5, such an electric variable transmission comprises an electromechanical converter, provided with a primary shaft 5 having a rotor 8 mounted thereon, a secondary shaft 7 having an interrotor 15 mounted thereon, and a stator 10 fixedly mounted to the housing 3 of the electromechanical converter. Viewed from the primary shaft 5 in radial direction, the rotor 8, the interrotor 15 and the stator 10 are arranged concentrically relative to each other. The rotor 8 and the stator 10 may be designed with one or more mono- or polyphase electrically accessible windings. The interrotor 15 forms one whole both mechanically and electromagnetically, and is arranged as a conductor for the magnetic flux in tangential and radial direction. The pattern of magnetic poles in the magnetic flux conducting material on at least one side of the interrotor is free, and can be varied during operation. For more details on the electric variable transmission reference is made to WO 03/075437, in particular to the description of the exemplary embodiment shown in fig. 3 of WO'437.

The primary shaft 5 may for example be coupled to split device 2, e.g. via a gear transmission having a fixed ratio. The secondary shaft 7 may for example be coupled to a drive shaft forming the mechanical path I at junction point 16, e.g. via a gear transmission 10 having a fixed ratio.

Fig. 3 shows an alternative embodiment of the drive system 1', in which the power split device 2' is embodied as an output split device that is arranged to split output power. In this embodiment, the transmission paths I' and II' are joined at the transmission entrance via a junction point 16', and are split at the transmission output via a power split device 2 at the transmission output. In fig. 4 it is illustrated that also in this embodiment, the electric machines 4' form a cascaded power split having both a mechanical and a electrical drive path. The second path II' includes a mechanical sub path IIa' and an electrical sub path IIb' in parallel.

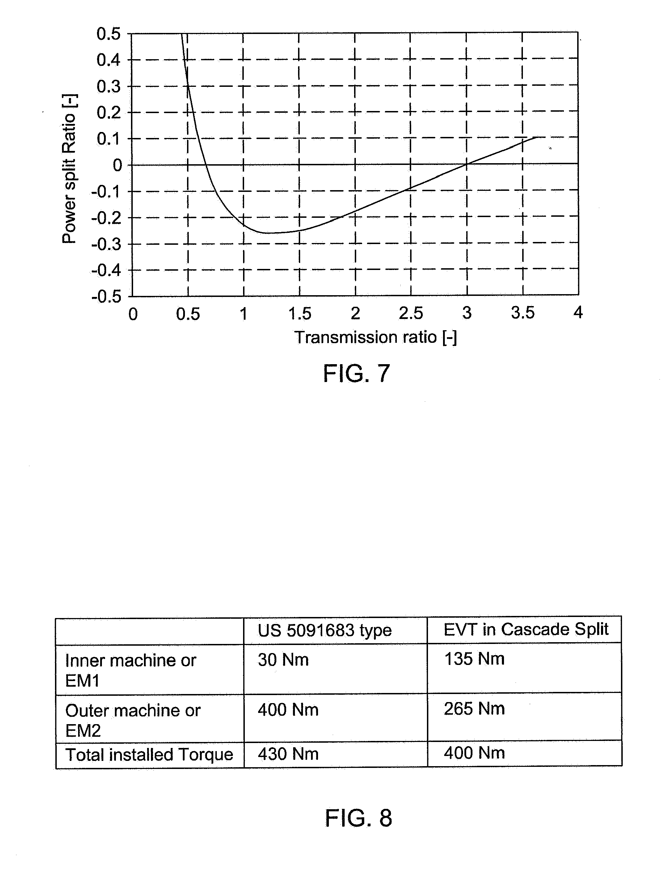

Figure 6 of the present application shows a graph is which the power split characteristic for a drive system with input split in a conventional drive system for a hybrid vehicle, e.g. as disclosed in US 5 991 683, is compared to a drive system according to the invention that comprises an electric variable transmission (E.V.T.). In the graph, transmission ratio TR (output torque /input torque) is denoted on the horizontal axis, while W/win (electrical split power / input shaft power) is denoted on the vertical axis. The system as disclosed in US'683 and E.V.T. have a similar characteristic, but points of zero mechanical split power are at different locations. By providing the drive path II that comprises the two mechanically integrated and magnetically coupled electric machines with a mechanical transmission, here a gear transmission having a fixed transmission ratio 9, 10 at respectively the input and output of the coupled machines, the points of zero electrical split power may be moved relative to each other. By correct "tuning" in this fashion, the characteristic as shown in figure 7 may be achieved. As can be readily seen from the figure, the required split power for a given ratio range is significantly reduced. In the graph of figure 7, the transmission ratio is denoted on the horizontal axis, while the power split ratio is denoted on the vertical axis.

In the table of figure 8, an overview for machine torques is given that is needed for equivalent performance to a conventional hybrid transmission The table shows the required "air gap torques" for the inner and outer airgap for an E.V.T. configuration, and the torques required for each electric machine a system of the type of US'683. In both cases the transmission input torque and the transmission output torque are the same. With electric machines of a given type and characteristic, the torque rating is proportional to machine physical size. The E.V.T. in cascade powersplit has reduced requirements for the volume of the electric machines compared with the system of US'683, as can be seen by the total installed torque figure. This leads to a much more compact package. The transmission may be controlled by controlling the electric variable transmission. In general use, the input shaft of the electric variable transmission is speed controlled. This controls the input shaft speed of the transmission, which is generally connected to an engine. The output is torque controlled. In the control of the electric variable transmission, many options are possible, such as regenerative breaking, engine start en stop, boost charge etc.

It shall be clear to the skilled person that the invention is not limited to the embodiments described herein. Many variations are possible within the scope of the invention as defined in the appended claims.

## Claims

1. Drive system, in particular for a hybrid vehicle, comprising a power split device with associated drive paths, wherein at least one of the drive paths comprises two mechanically coupled electric machines that form a cascaded power split having both a mechanical and an electrical drive path.

2. Drive system according to claim 1, wherein the mechanically coupled electric machines comprise a dual air gap machine.

3. Drive system according to claim 2, wherein the dual air gap machine comprises a rotor, an interrotor and a stator that together form two mechanically integrated electric machines.

4. Drive system according to any of claims 1-3, wherein the two electric machines are magnetically coupled.

5. Drive system according to claim 4, wherein the two electrically and magnetically coupled electric machines are part of an electric variable transmission.

6. Drive system according to claim 5, wherein the electric variable transmission comprises an electromechanical converter provided with a primary shaft having a rotor mounted thereon, a secondary shaft having an interrotor mounted thereon, and a stator, fixedly mounted to the housing of the electromechanical converter, wherein, viewed from the primary shaft (5) in radial direction, the rotor, the interrotor and the stator are arranged concentrically relative to each other, and wherein the rotor and the stator are designed with one or more mono- or polyphase, electrically accessible windings, wherein the interrotor forms one whole both mechanically and electromagnetically, and is arranged as a conductor for the magnetic flux in tangential and radial direction, and wherein the pattern of magnetic poles in the magnetic flux conducting material on at least one side of the interrotor is free and can be varied during operation.

7. Drive system according to any of the preceding claims, wherein the power split device comprises a planetary gear.

8. Drive system according to any of the preceding claims, wherein the power split device is an output split device that is arranged to split output power.

9. Drive system according to any of the preceding claims, wherein the input power is generated is by a combustion engine.

10. Drive system according to any of the preceding claims, wherein a further drive path associated with the power split device is a mechanical drive path that transmits mechanical power only.

11. Drive system according any of the preceding claims, wherein said drive path comprising the two mechanically coupled electric machines includes a mechanical transmission, preferably a gear transmission having a fixed transmission ratio, at the input and/or output of the magnetically coupled electric machines.

12. Hybrid vehicle, comprising a drive system according to any of the preceding claims.

13. Method for transmission of power in a drive system, wherein the drive power is split into drive paths, and wherein the power in one of the drive paths is split again using two mechanically coupled electric machines, in particular dual air gap electric machines.

14. Use of a dual air gap electric machine, in particular an electric variable transmission, in a drive path of a drive system with a power split device.
